# EUROPÄISCHE PATENTSCHRIFT

(11) **EP 3 124 123 B1**
(45) Veröffentlichungstag und Bekanntmachung des Hinweises auf die Patenterteilung: **24.01.2018**
(21) Anmeldenummer: 16180513.0
(22) Anmeldetag: 21.07.2016
(51) Int. Cl.: B05B 15/00

(54) **FILTER FÜR HOCHDRUCKDÜSE, HOCHDRUCKDÜSE UND VERFAHREN ZUM HERSTELLEN EINES FILTERS FÜR EINE HOCHDRUCKDÜSE**
FILTER FOR HIGH PRESSURE NOZZLE, HIGH PRESSURE NOZZLE AND METHOD FOR PRODUCING A FILTER FOR A HIGH PRESSURE NOZZLE
FILTRE POUR BUSE HAUTE PRESSION, BUSE HAUTE PRESSION ET PROCÉDÉ DE PRODUCTION D'UN FILTRE POUR UNE BUSE HAUTE PRESSION

(30) Priorität: 27.07.2015 DE 102015214123
(43) Veröffentlichungstag der Anmeldung: 01.02.2017
(73) Patentinhaber: Lechler GmbH, 72555 Metzingen (DE)
(72) Erfinder: Foshag, Siegfried, 72649 Wolfschlugen (DE)
(74) Vertreter: Patentanwälte Ruff, Wilhelm, Beier, Dauster & Partner mbB

(56) Entgegenhaltungen:
- EP-A1- 1 992 413
- EP-A2- 1 992 415
- WO-A1-2014/009713

## Beschreibung

Die Erfindung betrifft einen Filter für eine Hochdruckdüse mit einem Rohrabschnitt und einem Kappenabschnitt, wobei der Kappenabschnitt und/oder der Rohrabschnitt mit mehreren, in Längsrichtung des Rohrabschnitts verlaufenden Filterschlitzen versehen sind, die jeweils ein auf der Seite des Rohrabschnitts gelegenes erstes Ende und ein auf der Seite des Kappenabschnitts gelegenes zweites Ende aufweisen.

Eine Hochdruckdüse mit einem Filter ist aus der europäischen Patentschrift EP 1 992 415 B1 bekannt. Solche Hochdruckdüsen sind zum Versprühen von Flüssigkeiten mit Drücken vorgesehen, die mehrere 100 bar bis 600 bar betragen können. Beispielsweise werden solche Hochdruckdüsen zum Entzundern von Stahlerzeugnissen verwendet. Ein Düsengehäuse, das mit dem Filter versehen ist, wird hierzu in einen Anschlussnippel oder ein Anschlussrohr eingesetzt. Die zu versprühende Flüssigkeit gelangt dann durch die Filterschlitze in den Strömungskanal der Hochdruckdüse, der dann zur Düsenmündung führt. Vorgeschlagen wird, den Filter als Sinterteil auszuführen, um dadurch eine Gestaltung der Endbegrenzungsflächen der Eintrittsschlitze in beliebiger und vor allem strömungsgünstiger Weise vornehmen zu können.

Aus dem deutschen Gebrauchsmuster DE 297 06 863 U1 ist eine weitere Hochdruckdüse bekannt. Diese Hochdruckdüse weist ebenfalls einen Filter auf, der mit mehreren, in Längsrichtung verlaufenden Schlitzen versehen ist. Diese Schlitze werden in das Filtergehäuse mittels eines Kreissägeblatts eingesägt.

Eine Hochdruckdüse zum Entzundern von Stahlerzeugnissen mit einem Filter, der mehrere in Längsrichtung des Rohrabschnitts des Filters verlaufende Filterschlitze aufweist, ist auch aus der US-Patentschrift US 4,848,672 bekannt. Die Filterschlitze werden in den Filter mittels eines Kreissägeblatts eingesägt. Stromabwärts des Filters ist ein Strahlrichter vorgesehen, der in den Strömungskanal der Düse eingesetzt wird, um die Strömung in Längsrichtung auszurichten und vor allem Turbulenzen zu vermeiden.

Mit der Erfindung sollen ein Filter, eine Hochdruckdüse sowie ein Verfahren zum Herstellen eines Filters verbessert werden.

Erfindungsgemäß ist hierzu ein Filter für eine Hochdruckdüse mit einem Rohrabschnitt und einem Kappenabschnitt vorgesehen, wobei der Kappenabschnitt und/oder der Rohrabschnitt mit mehreren, in Längsrichtung des Rohrabschnitts verlaufenden Filterschlitzen versehen sind, die jeweils ein auf der Seite des Rohrabschnitts gelegenes erstes Ende und ein auf der Seite des Kappenabschnitts gelegenes zweites Ende aufweisen, bei dem eine koaxial zum Rohrabschnitt angeordnete Hülse vorgesehen ist, die die Filterschlitze im Bereich des ersten Endes der Filterschlitze abdeckt.

Mit der Hülse werden die Filterschlitze im Bereich des ersten, auf der Seite des Rohrabschnitts gelegenen Endes abgedeckt. Dadurch spielt die Gestaltung des ersten Endes der Filterschlitze bei der Einströmung der unter hohem Druck, beispielsweise zwischen 50 bar und 800 bar, stehenden Flüssigkeit in den Filter keine Rolle mehr oder nur noch eine zu vernachlässigende Rolle. Denn die Hülse deckt in radialer Richtung gesehen den Filterschlitz im Bereich des ersten Endes der Filterschlitze ab. Die Flüssigkeit muss, um durch die Filterschlitze einzuströmen, somit das Ende der Hülse passieren und strömt nur noch in einem zu vernachlässigenden Ausmaß an dem ersten Ende der Filterschlitze vorbei. Durch das einfache Vorsehen einer Hülse, die in radialer Richtung gesehen das erste Ende der Filterschlitze verdeckt bzw. abdeckt, lässt sich eine wesentliche Verbesserung der Strömungsverhältnisse an einem Filter für Hochdruckdüsen erreichen. Es wurde festgestellt, dass die Entstehung von Turbulenzen beim Einströmen der Flüssigkeit im Bereich des ersten Endes der Filterschlitze verhindert bzw. weitgehend vermieden werden kann. Gegenüber Hochdruckdüsen nach dem Stand der Technik, bei denen der Filter als Sinterteil hergestellt wird, so dass das erste Ende der Filterschlitze in strömungsgünstiger Weise gestaltet werden kann oder gegenüber einer mechanischen Nachbearbeitung des ersten Endes der Filterschlitze stellt die erfindungsgemäße Lösung eine vor allem produktionstechnisch gesehen erhebliche Vereinfachung dar. Nach dem Sägen der Filterschlitze wird die Hülse wenigstens im Bereich des ersten Endes der Filterschlitze angeordnet. Die Filterschlitze müssen dadurch aber nicht mehr nachbearbeitet werden. Dies stellt vor allem bei der Herstellung solcher Filter in großen Stückzahlen eine erhebliche Erleichterung dar, da die Filterschlitze, um ihre Filterfunktion erfüllen zu können, in der Regel sehr schmal sind und üblicherweise eine Breite von etwa 1 mm aufweisen. Die erfindungsgemäße Hochdruckdüse ist beispielsweise zum Entzundern von Stahlerzeugnissen vorgesehen.

In Weiterbildung der Erfindung ist die Hülse innerhalb des Rohrabschnitts und/oder des Kappenabschnitts angeordnet und bildet wenigstens abschnittsweise einen Strömungskanal durch den Filter.

Die Anordnung der Hülse innerhalb des Rohrabschnitts und/oder des Kappenabschnitts ist in vergleichsweise einfacher Weise zu realisieren. Beispielsweise wird in dem Filtergehäuse eine axiale Bohrung angebracht, in die dann die Hülse eingeschoben wird. Mit der Hülse können die Stege zwischen den Filterschlitzen mechanisch stabilisiert werden, was insbesondere beim Auftreten von Druckstößen vorteilhaft ist.

In Weiterbildung der Erfindung ist eine Mittenbohrung der Hülse zum stromaufwärts liegenden Ende erweitert.

Die Hülse bildet wenigstens abschnittsweise einen Strömungskanal durch die Düse und die zu versprühende Flüssigkeit strömt durch die Filterschlitze in das stromaufwärts liegende Ende der Hülse ein. Eine Erweiterung der Mittenbohrung der Hülse zum stromaufwärts liegenden Ende hin kann einen Strömungswiderstand der Hülse verringern, das Entstehen von Turbulenzen verhindern und dadurch für eine erhöhte Leistungsfähigkeit der mit dem Filter versehenen Hochdruckdüse sorgen.

In Weiterbildung der Erfindung ist eine Stirnfläche der Hülse am stromaufwärts liegenden Ende abgerundet ausgebildet.

Auch eine Abrundung der Stirnfläche der Hülse am stromaufwärts liegenden Ende trägt zu einem verringerten Strömungswiderstand und dadurch zu einer Verbesserung der Leistungsfähigkeit der mit dem Filter versehenen Hochdruckdüse bei.

In Weiterbildung der Erfindung liegt die Hülse an einer Außenseite des Rohrabschnitts und/oder des Kappenabschnitts an.

Auch durch eine Anordnung der Hülse an der Außenseite des Filters ist es möglich, die Filterschlitze im Bereich des ersten Endes der Filterschlitze abzudecken bzw. zu verdecken. Auf der Außenseite des Filters kann eine Hülse in besonders einfacher Weise angeordnet werden, beispielsweise durch einfaches Aufschieben auf den Filter und nachfolgendes Fixieren der Hülse.

In Weiterbildung der Erfindung liegt die Hülse wenigstens im Bereich des ersten Endes der Filterschlitze an einer Außenseite oder Innenseite des Rohrabschnitts oder des Kappenabschnitts an.

Dadurch wird eine Strömung durch die Filterschlitze im Bereich des ersten Endes der Schlitze weitgehend verhindert. Die Gestaltung des ersten Endes der Filterschlitze spielt dadurch keine oder nur noch eine vernachlässigbare Rolle in Bezug auf den Strömungswiderstand beziehungsweise entstehende Turbulenzen für die in den Filter eintretende Flüssigkeit.

Das der Erfindung zugrundeliegende Problem wird auch durch eine Hochdruckdüse mit einem erfindungsgemäßen Filter gelöst.

In Weiterbildung der Erfindung ist bei einer erfindungsgemäßen Hochdruckdüse vorgesehen, dass die Hülse innerhalb des Rohrabschnitts angeordnet ist und wenigstens abschnittsweise einen Strömungskanal durch den Filter bildet, wobei am stromabwärts gelegenen Ende der Hülse ein freier Strömungsquerschnitt der Hülse dem freien Strömungsquerschnitt im Düsengehäuse entspricht.

Dadurch ist ein absatzloser Übergang zwischen der Hülse und der Fortsetzung des Strömungskanals im Düsengehäuse möglich. Die Entstehung von Turbulenzen kann dadurch verhindert werden und die Leistungsfähigkeit der Hochdruckdüse wird verbessert.

Das der Erfindung zugrundeliegende Problem wird auch durch ein Verfahren zum Herstellen eines Filters für eine Hochdruckdüse gelöst, bei dem das Einsägen von Filterschlitzen in einen Rohrabschnitt und/oder einen Kappenabschnitt des Filters parallel zu einer Längsrichtung des Rohrabschnitts und das Anordnen einer Hülse koaxial zum Rohrabschnitt vorgesehen ist, so dass die Hülse die Filterschlitze im Bereich des ersten Endes der Filterschlitze abdeckt.

Das Einsägen von Filterschlitzen in einen Rohrabschnitt und/oder einen Kappenabschnitt des Filters lässt sich auch bei einer Produktion in großen Stückzahlen vergleichsweise einfach und prozesssicher realisieren. Dem Einsägen von Filterschlitzen wird dabei der Vorzug gegeben gegenüber dem Einfräsen von Filterschlitzen. Dies deshalb, da die Breite der Filterschlitze in der Regel in einem Bereich von 1 mm liegt und Fräser eines solchen Durchmessers äußerst empfindlich in der Handhabung sind. Das beim Einsägen der Filterschlitze entstehende konvex gestaltete Ende der Filterschlitze spielt strömungstechnisch dann keine Rolle mehr, wenn erfindungsgemäß eine Hülse koaxial zum Rohrabschnitt angeordnet wird, so dass die Hülse die Filterschlitze im Bereich des ersten Endes der Filterschlitze abdeckt. In überraschend einfacher Weise können dadurch die produktionstechnischen Vorteile des Einsägens der Filterschlitze mit einer strömungsgünstigen Gestaltung des ersten Endes der Filterschlitze kombiniert werden.

In Weiterbildung der Erfindung wird die Hülse innerhalb des Rohrabschnitts und/oder des Kappenabschnitts angeordnet.

In Weiterbildung der Erfindung kann die Hülse auf einer Außenseite des Rohrabschnitts und/oder des Kappenabschnitts angeordnet werden.

Im Rahmen der Erfindung ist dabei das Anordnen von zwei Hülsen abgedeckt, dass also eine erste Hülse innerhalb des Rohrabschnitts und/oder des Kappenabschnitts und eine zweite Hülse auf einer Außenseite des Rohrabschnitts und/oder des Kappenabschnitts angeordnet wird. Eine solche Lösung ist aufwändig, kann aber vorgesehen werden, wenn spezielle Einbauverhältnisse, Größenverhältnisse oder Strömungsverhältnisse es erfordern.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen gezeigten oder beschriebenen Ausführungsformen lassen sich dabei in beliebiger Weise miteinander kombinieren, ohne den Rahmen der Erfindung zu überschreiten. In den Zeichnungen zeigen:
- Fig. 1: eine erfindungsgemäße Hochdruckdüse in einer Ansicht von schräg unten,
- Fig. 2: eine Ansicht der Hochdruckdüse der Fig. 1 von hinten,
- Fig. 3: die Hochdruckdüse der Fig. 1 in einer Seitenansicht,
- Fig. 4: die Hochdruckdüse der Fig. 1 in einer Vorderansicht,
- Fig. 5: eine Ansicht auf die Schnittebene A-A in Fig. 3,
- Fig. 6: eine Ansicht des Filters der Hochdruckdüse der Fig. 1 von schräg oben,
- Fig. 7: eine Ansicht des Filters der Fig. 6 von hinten,
- Fig. 8: eine Seitenansicht des Filters der Fig. 6,
- Fig. 9: eine Ansicht des Filters der Fig. 6 von vorne,
- Fig. 10: eine Ansicht auf die Schnittebene A-A in Fig. 8,
- Fig. 11: eine Schnittansicht eines erfindungsgemäßen Filters für eine Hochdruckdüse gemäß einer weiteren Ausführungsform,
- Fig. 12: einen Anschlussnippel mit eingebauter erfindungsgemäßer Hochdruckdüse,
- Fig. 13: eine Ansicht auf die Schnittebene A-A in Fig. 12 und
- Fig. 14: die vergrößerte Ansicht der Einzelheit Y in Fig. 13.

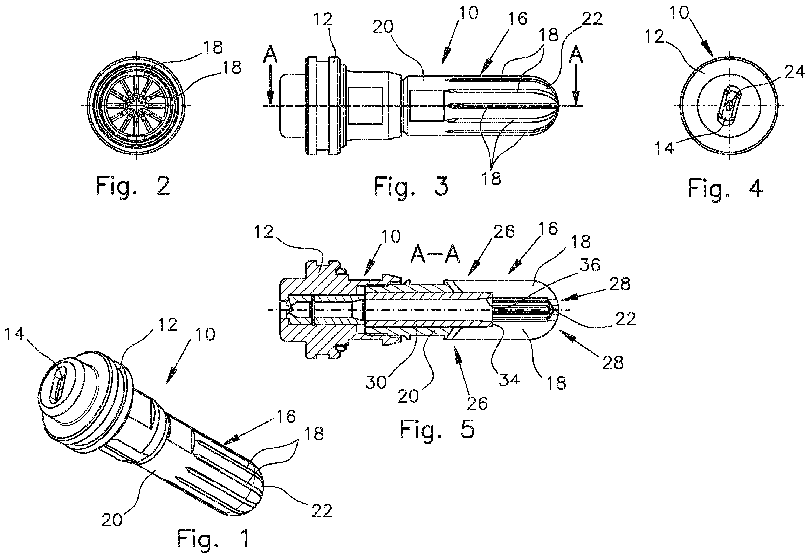

Die Darstellung der Fig. 1 zeigt eine erfindungsgemäße Hochdruckdüse 10, wobei die Hochdruckdüse 10 ein Gehäuse 12, ein in Fig. 1 lediglich abschnittsweise zu erkennendes Düsenmundstück 14 und einen mit dem Gehäuse 12 verbundenen Filter 16 aufweist.

Zu versprühende Flüssigkeit tritt in den Filter 16 durch mehrere, in Längsrichtung des Filters verlaufende Filterschlitze 18 ein und gelangt dadurch in einen in Fig. 1 nicht erkennbaren Strömungskanal im Inneren des Düsengehäuses 12. Die zu versprühende Flüssigkeit gelangt zum Düsenmundstück 14 und speziell zur Austrittsöffnung im Düsenmundstück 14 und tritt bei der dargestellten Ausführungsform in Form eines Flachstrahls aus.

Die dargestellte Hochdruckdüse 10 ist zum Entzundern von Stahlerzeugnissen vorgesehen. Ein Druck der zu versprühenden Flüssigkeit liegt typischerweise im Bereich von etwa 50 bar bis mehreren 100 bar, beispielsweise 800 bar. Die mechanischen Anforderungen an die Hochdruckdüse 10 sind dadurch erheblich, da in den Rohrleitungen, die zu der Hochdruckdüse 10 führen, Druckstöße auftreten können, die dann noch wesentlich höhere Spitzendrücke haben. Der Filter 16 ragt in der Regel in eine Rohrleitung hinein, durch die zu versprühende Flüssigkeit zugeführt wird. Der Filter 16 ist dadurch hohen mechanischen Beanspruchungen ausgesetzt und beim Eintritt der zu versprühenden Flüssigkeit durch die Filterschlitze 18 entstehende Turbulenz beeinflusst auch die Leistungsfähigkeit der Hochdruckdüse 10 nachteilig.

Die Darstellung der Fig. 2 zeigt die Hochdruckdüse 10 der Fig. 1 von hinten, also in Strömungsrichtung gesehen. Zu erkennen ist, dass die Filterschlitze 18 in radialer Richtung in dem Filter 16 angeordnet sind.

Der Filter 16 weist bei der dargestellten Ausführungsform einen Rohrabschnitt 20 und einen Kappenabschnitt 22 auf. Die Filterschlitze 18 verlaufen in Längsrichtung des Rohrabschnitts 20 und sind sowohl im Kappenabschnitt 22 als auch im Rohrabschnitt 20 angeordnet.

Anhand der Enden der Filterschlitze 18 in Fig. 1 sowie Fig. 2 ist zu erkennen, dass diese mit einem Kreissägeblatt eingebracht werden, das an seinem Umfang in eine linienförmige Kante ausläuft. Aus diesem Grund laufen auch die Enden der Filterschlitze 18 jeweils in eine Kante aus. Im Rahmen der Erfindung ist es dabei ebenfalls vorgesehen, die Filterschlitze 18 mit einem Sägeblatt einzubringen, das an seiner umlaufenden Kante rechteckig ausgestaltet ist.

Die Darstellung der Fig. 3 zeigt eine Seitenansicht der Hochdruckdüse 10. Auch in dieser Ansicht sind die in Längsrichtung des Rohrabschnitts 20 eingebrachten Filterschlitze 18 zu erkennen, die sich vom Kappenabschnitt 22 bis in den Rohrabschnitt 20 hinein erstrecken. Als Rohrabschnitt 20 wird bei der dargestellten Ausführungsform der Hochdruckdüse 10 dabei ein kreiszylindrischer Abschnitt des Filters 16 bezeichnet. Als Kappenabschnitt wird dann der etwa halbkugelförmige Abschnitt bezeichnet, der ein Ende des Rohrabschnitts 20 abschließt. Der Filter 16 ist bei der dargestellten Ausführungsform einstückig ausgebildet. Der Filter 16 kann beispielsweise aus einer gedrehten Messingkappe hergestellt werden, in die die Filterschlitze 18 eingesägt werden.

Die Darstellung der Fig. 4 zeigt die Hochdruckdüse 10 der Fig. 1 von vorne. Neben dem Düsengehäuse 12 ist das Düsenmundstück 14 mit der Austrittsöffnung 24 zu erkennen.

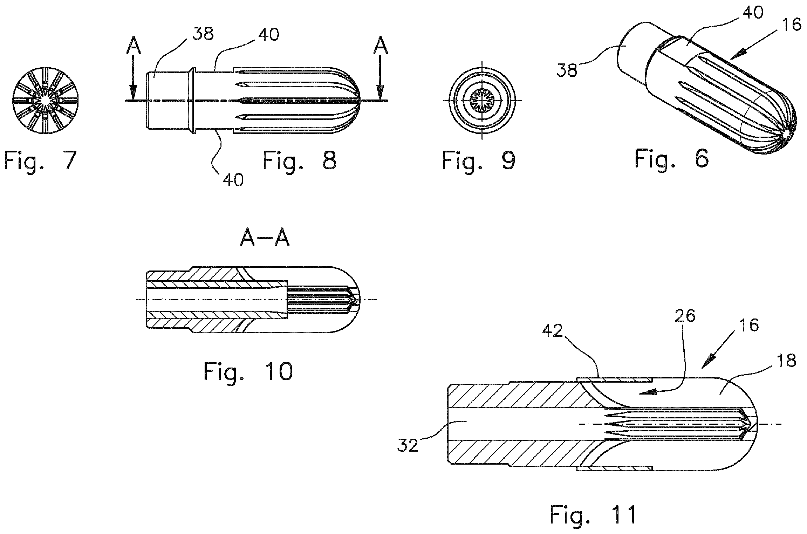

Die Schnittansicht der Fig. 5 lässt die Gestaltung der Filterschlitze 18 erkennen. Die Filterschlitze 18 weisen jeweils ein erstes Ende 26 und ein zweites Ende 28 auf, wobei das erste Ende 26 auf der Seite des Rohrabschnitts 20 liegt und das zweite Ende 28 auf der Seite des Kappenabschnitts 22. Das erste Ende 26 ist in Strömungsrichtung durch die Hochdruckdüse 10 somit am stromabwärts gelegenen Ende der Filterschlitze 18 angeordnet und das zweite Ende 28 ist in Strömungsrichtung gesehen am stromaufwärts liegenden Ende der Filterschlitze 18 angeordnet. Beide Enden 26, 28 laufen, wie bereits erläutert wurde, spitz auf eine Kante zu. Dies wird dadurch verursacht, dass die Filterschlitze 18 mit einem am Rand spitz zulaufenden Kreissägeblatt eingesägt werden. Wie bereits ausgeführt wurde, können die Enden 26, 28 der Filterschlitze 18 auch rechteckförmig gestaltet sein, wenn sie mit einem am Rand rechteckförmig ausgebildeten Sägeblatt eingesägt werden.

Das Einsägen der Filterschlitze 18 erfolgt in der Darstellung der Fig. 5 von rechts her kommend. Das Kreissägeblatt wird von rechts nach links verschoben und durchtrennt damit zunächst den Kappenabschnitt 22 und gelangt dann in den Rohrabschnitt 20. Die Vorschubbewegung des Sägeblatts wird dann gestoppt und es ergibt sich eine Formgebung des in Fig. 5 links angeordneten ersten Endes 26 der Filterschlitze 18. Die Formgebung des ersten Endes 26 folgt der Außenkontur des Sägeblatts und bildet infolgedessen eine konvexe Oberfläche. Zur Mitte des Filters 16 hin läuft diese Oberfläche in eine scharfe Kante aus, was in der Darstellung der Fig. 5 allerdings nicht zu erkennen ist, da dort bereits eine Hülse 30 angeordnet ist. In der Darstellung der Fig. 11 ist aber zu erkennen, wie die Kante am Übergang einer Mittenbohrung 32 des Filters 16 zu den Filterschlitzen 18 ausgebildet ist. Speziell folgt diese umlaufende Kante einer Zick-Zack-Linie, verursacht durch die Gestaltung des Sägeblatts. Die Gestaltung dieser Kante in Fig. 11 entsteht aufgrund der Verwendung eines Sägeblatts mit umlaufender spitz zulaufender Kante. Würde anstatt dessen ein Sägeblatt mit nicht spitz sondern rechteckförmiger Kante verwendet werden, würde sich keine Zick-Zack-Linie, sondern eine Kante ergeben, die durch mehrere, im Abstand voneinander angeordnete jeweils rechteckförmige Nuten gekennzeichnet ist.

In jedem Fall ist der Verlauf dieser scharfen Kante ungünstig für die Strömung gestaltet und trägt zur Erzeugung von Turbulenzen bei. Um die Entstehung solcher Turbulenzen zu verhindern oder jedenfalls so weit wie möglich zu verhindern, wird bei der Düse gemäß der Ausführungsform der Fig. 5 die Hülse 30 in den Filter eingesetzt. Hierzu ist die Mittenbohrung des Filters stufenförmig ausgeführt, so dass die Hülse 30 in der Darstellung der Fig. 5 von links her bis zu einem Absatz 34 in den Filter eingeschoben werden kann. Der Absatz 34 liegt in Strömungsrichtung gesehen stromaufwärts der ersten Enden 26 der Filterschlitze 18. Durch die Filterschlitze 18 von außen in den Filter 16 eintretende Flüssigkeit muss dadurch in das stromaufwärts und in Fig. 5 rechts gelegene Ende der Hülse 30 einströmen. Es ist Fig. 5 zu entnehmen, dass dadurch die Formgebung des ersten Endes 26 der Filterschlitze 18 in Bezug auf die einströmende Flüssigkeit praktisch keine Rolle mehr spielt. Denn die entscheidende Eintrittskante für die Flüssigkeit wird nun durch das stromaufwärts und in Fig. 5 rechts liegende Ende der Hülse 30 bestimmt. Das erste Ende 26 der Filterschlitze wird infolgedessen lediglich noch schwach durchströmt, da ja die Hülse 30 die Filterschlitze 18 im Bereich des ersten Endes 26 abdeckt.

Eine Mittenbohrung der Hülse 30 ist an ihrem stromaufwärts gelegenen Ende, also dem in Fig. 5 rechts gelegenen Ende, sich erweiternd ausgeführt. Speziell ist bei der dargestellten Ausführungsform ein sich gegen die Strömungsrichtung erweiternder Konus 36 vorgesehen. Die zu versprühende Flüssigkeit tritt über diesen sich in Strömungsrichtung dann verjüngenden Konus 36 ein. Dadurch wird der Strömungswiderstand am Eintritt in die Hülse 30 verringert. Die gegen die Strömung gerichtete Stirnfläche der Hülse 30, also die in Fig. 5 rechts angeordnete Stirnfläche der Hülse 30, kann darüber hinaus abgerundet ausgebildet sein, um einen Strömungswiderstand weiter zu verringern. Es ist dabei zu berücksichtigen, dass diese in Fig. 5 rechts angeordnete Stirnfläche der Hülse 30 nur im Bereich der Filterschlitze 18 von der zu versprühenden Flüssigkeit angeströmt wird. Zwischen den Filterschlitzen 18 decken die Stege, die die Filterschlitze 18 voneinander trennen, auch die Stirnfläche der Hülse 30 ab.

Die Darstellungen der Fig. 6 bis 10 zeigen den Filter 16 vor dem Zusammenbau mit dem Düsengehäuse 10. Der Filter 16 wird mit einem zylindrischen Abschnitt 38, der mit einem Gewinde versehen sein kann, in dem Gehäuse 10 befestigt.

Der Filter 16 ist mit zwei gegenüberliegenden, ebenen Angriffsflächen 40 für einen Schraubenschlüssel versehen, um den Filter 16 in das Gehäuse 10 einschrauben zu können.

Die Darstellung der Fig. 11 zeigt, wie bereits erwähnt wurde, eine weitere Ausführungsform eines erfindungsgemäßen Filters 16. Zur Vermeidung von Wiederholungen werden dabei lediglich diejenigen Merkmale beschrieben, die zu dem in den Fig. 1 bis 10 gezeigten Filter unterschiedlich sind.

Der Filter 16 der Fig. 11 ist mit einer Hülse 42 versehen, die an einer radial außenliegenden Außenfläche des Filters 16 anliegt. Die Hülse 42 überdeckt dadurch die ersten Enden 26 der Filterschlitze 18 und verhindert dadurch, dass die Formgebung der ersten Enden 26 der Filterschlitze 18 eine erhöhte Turbulenz und dadurch einen erhöhten Strömungswiderstand beim Eintritt der zu versprühenden Flüssigkeit in den Filter 16 verursachen kann.

Speziell ist anhand der Fig. 11 zu erkennen, dass die Flüssigkeit von dem in Fig. 11 rechts, also stromaufwärts gelegenen Ende der Hülse 42 direkt in die Filterschlitze 18 einströmt. Im Bereich der ersten Enden 26 der Filterschlitze 18 ist dahingegen lediglich eine zu vernachlässigende Strömung vorhanden. Die Formgebung der ersten Enden 26 der Filterschlitze 18, die durch das Einsägen der Schlitze mittels eines Kreissägeblatts bedingt ist, verursacht dadurch nur geringe Turbulenzen und nur einen geringfügig erhöhten Strömungswiderstand.

Da die Hülse 42 auf den Filter 16 der Fig. 11 außen aufgesetzt ist und an der Außenfläche des Filters 16 anliegt, bildet die Mittenbohrung 32 des Filters 16 selbst einen Abschnitt des Strömungskanals durch die Hochdruckdüse.

Sowohl bei der Ausführungsform der Fig. 1 bis 10 als auch der Ausführungsform der Fig. 11 hat sich gezeigt, dass durch die Hülsen 30 bzw. 42, die jeweils die auf der Seite des Rohrabschnitts 20 des Filters 16 liegenden ersten Enden 26 der Filterschlitze 18 abdecken, die zu versprühende Flüssigkeit so wenig Turbulenzen nach dem Eintritt in den Filter 16 aufweist, dass auf einen Strahlrichter im weiteren Strömungskanal bis zur Austrittsöffnung 24 in der Regel verzichtet werden kann. Die erfindungsgemäße Hochdruckdüse 10 ist dadurch kostengünstig zu fertigen und, da ein Strahlrichter immer auch einen Strömungswiderstand verursacht, äußerst leistungsfähig. Speziell ist ein sogenannter Impact, also ein Auftreffimpuls des erzeugten Flachstrahls auf eine zu entzundernde Oberfläche, im Vergleich zu konventionellen Düsen nach dem Stand der Technik größer.

Bei sehr ungünstiger Anströmung des Filters kann ein Strahlrichter strömungsberuhigend wirken. Ein Strahlrichter kann bei der erfindungsgemäßen Hochdruckdüse vorgesehen sein und kann beispielsweise in die Hülse 30 eingebaut werden.

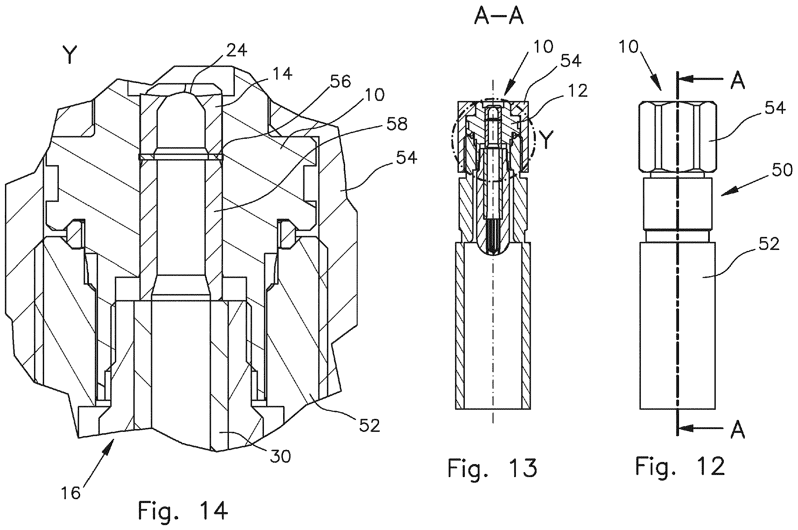

Die Darstellung der Fig. 12 zeigt einen Anschlussnippel 50, in den die erfindungsgemäße Hochdruckdüse 10 eingebaut ist, in einer Seitenansicht. Die Hochdruckdüse 10 ist in der Ansicht der Fig. 12 allerdings nicht zu erkennen. Der Anschlussnippel 50 weist einen Rohrabschnitt 52 auf, auf dessen freies, in Fig. 12 oberes Ende eine Überwurfmutter 54 aufgeschraubt ist.

In der Schnittansicht der Fig. 13 auf die Schnittebene A-A in Fig. 12 ist zu erkennen, dass mit der Überwurfmutter 54 das Gehäuse 12 der Hochdruckdüse gegen den Anschlussnippel 52 vorgespannt wird. Dadurch wird die Hochdruckdüse 10 sicher und dennoch leicht auswechselbar an dem Anschlussnippel 52 gehalten. Der Anschlussnippel 52 kann das Ende einer Rohrleitung markieren, über die zu versprühende Flüssigkeit zugeführt wird. Der Anschlussnippel 52 kann aber beispielsweise auch in eine senkrecht zum Anschlussnippel 52 verlaufende Rohrleitung eingeschweißt werden.

Die Darstellung der Fig. 14 zeigt die vergrößerte Einzelheit Y der Fig. 13. Zu erkennen ist die Austrittsöffnung 24, aus der ein Flachstrahl austritt und die an einem Düsenmundstück 14 vorgesehen ist. Entgegen der Strömungsrichtung gesehen, in Fig. 14 also von oben nach unten, folgt innerhalb des Düsengehäuses 10 auf das Mundstück 14 zunächst eine Ringdichtung 56, dann eine Zwischenhülse 58 und dann, gegebenenfalls unter Zwischenfügung einer weiteren, nicht dargestellten Ringdichtung, die Hülse 30, die in den Filter 16 eingesetzt ist. Es ist zu erkennen, dass der Durchmesser eines Strömungskanals in der Hülse 30 dem Durchmesser des Strömungskanals am stromaufwärts gelegenen Ende der Zwischenhülse 58 entspricht. Dadurch kann die zu versprühende Flüssigkeit unter geringen Druckverlusten bis zur Austrittsöffnung 24 geleitet werden.

Das Düsenmundstück 14 besteht vorteilhafterweise aus Hartmetall, um eine hohe Standzeit der Hochdruckdüse 10 zu gewährleisten.

## Patentansprüche

1. Filter (16) für eine Hochdruckdüse (10) mit einem Rohrabschnitt (20) und einem Kappenabschnitt (22), wobei der Kappenabschnitt (22) und/oder der Rohrabschnitt (20) mit mehreren, in Längsrichtung des Rohrabschnitts (20) verlaufenden Filterschlitzen (18) versehen sind, die jeweils ein auf der Seite des Rohrabschnitts (20) gelegenes erstes Ende (26) und ein auf der Seite des Kappenabschnitts (22) gelegenes zweites Ende (28) aufweisen, **dadurch gekennzeichnet, dass** eine koaxial zum Rohrabschnitt (20) angeordnete Hülse (30, 42) vorgesehen ist, die die Filterschlitze (18) im Bereich des ersten Endes (26) der Filterschlitze (18) abdeckt.

2. Filter nach Anspruch 1, **dadurch gekennzeichnet, dass** die Hülse (30) innerhalb des Rohrabschnitts (20) und/oder des Kappenabschnitts (22) angeordnet ist und wenigstens abschnittsweise einen Strömungskanal durch den Filter (16) bildet.

3. Filter nach wenigstens einem der vorstehenden Ansprüche, **dadurch gekennzeichnet, dass** eine Mittenbohrung der Hülse (30) zum stromaufwärts liegenden Ende erweitert ist.

4. Filter nach Anspruch 3, **dadurch gekennzeichnet, dass** eine Stirnfläche der Hülse (30) am stromaufwärts liegenden Ende abgerundet ausgebildet ist.

5. Filter nach einem der vorstehenden Ansprüche, **dadurch gekennzeichnet, dass** die Hülse (30; 42) wenigstens im Bereich des ersten Endes (26) der Filterschlitze (18) an einer Außenseite oder Innenseite des Rohrabschnitts (20) oder des Kappenabschnitts (22) anliegt.

6. Hochdruckdüse (10) mit einem Filter (16) nach wenigstens einem der vorstehenden Ansprüche.

7. Hochdruckdüse (10) nach Anspruch 6, **dadurch gekennzeichnet, dass** die Hülse (30) innerhalb des Rohrabschnitts (20) angeordnet ist und wenigstens abschnittsweise einen Strömungskanal durch den Filter (16) bildet und dass am stromabwärts gelegenen Ende der Hülse (30) ein freier Strömungsquerschnitt der Hülse (30) dem freien Strömungsquerschnitt im Düsengehäuse (12) entspricht.

8. Verfahren zum Herstellen eines Filters (16) für eine Hochdruckdüse (10), mit den Schritten Einsägen von Filterschlitzen (18) in einen Rohrabschnitt (20) und/oder einen Kappenabschnitt (22) des Filters (16) parallel zu einer Längsrichtung des Rohrabschnitts (20) und Anordnen einer Hülse (30; 42) koaxial zum Rohrabschnitt (20), so dass die Hülse (30; 42) die Filterschlitze (18) im Bereich des ersten Endes (26) der Filterschlitze (18) abdeckt.

9. Verfahren nach Anspruch 8, **gekennzeichnet durch** Anordnen der Hülse (30) innerhalb des Rohrabschnitts (20) und/oder des Kappenabschnitts (22).

10. Verfahren nach Anspruch 8, **gekennzeichnet durch** Anordnen der Hülse (42) auf einer Außenseite des Rohrabschnitts (20) und/oder des Kappenabschnitts (22).

## Claims

1. Filter (16) for a high-pressure nozzle (10) having a tubular section (20) and a cap section (22), wherein the cap section (22) and/or the tubular section (20) are provided with a plurality of filter slots (18), which extend in the longitudinal direction of the tubular section (20) and each have a first end (26) situated on the side of the tubular section (20) and a second end (28) situated on the side of the cap section (22), **characterized in that** a sleeve (30, 42) arranged coaxially with the tubular section (20) is provided, said sleeve covering the filter slots (18) in the region of the first end (26) of the filter slots (18).

2. Filter according to Claim 1, **characterized in that** the sleeve (30) is arranged within the tubular section (20) and/or the cap section (22) and forms a flow channel through the filter (16), at least in some section or sections.

3. Filter according to at least one of the preceding claims, **characterized in that** a central bore of the sleeve (30) is widened towards the upstream end.

4. Filter according to Claim 3, **characterized in that** an end face of the sleeve (30) is of rounded design at the upstream end.

5. Filter according to one of the preceding claims, **characterized in that** the sleeve (30; 42) rests against an outer side or an inner side of the tubular section (20) or of the cap section (22), at least in the region of the first end (26) of the filter slots (18).

6. High-pressure nozzle (10) having a filter (16) according to at least one of the preceding claims.

7. High-pressure nozzle (10) according to Claim 6, **characterized in that** the sleeve (30) is arranged within the tubular section (20) and forms a flow channel through the filter (16), at least in some section or sections, and **in that** a free flow cross section of the sleeve (30) corresponds to the free flow cross section in the nozzle housing (12) at the downstream end of the sleeve (30).

8. Method for producing a filter (16) for a high-pressure nozzle (10), having the steps of sawing filter slots (18) into a tubular section (20) and/or a cap section (22) of the filter (16) parallel to a longitudinal direction of the tubular section (20) and arranging a sleeve (30; 42) coaxially with the tubular section (20), with the result that the sleeve (30; 42) covers the filter slots (18) in the region of the first end (26) of the filter slots (18).

9. Method according to Claim 8, **characterized by** arrangement of the sleeve (30) within the tubular section (20) and/or the cap section (22).

10. Method according to Claim 8, **characterized by** arrangement of the sleeve (42) on an outer side of the tubular section (20) and/or of the cap section (22).

## Revendications

1. Filtre (16) pour une buse haute pression (10), comprenant une portion tubulaire (20) et une portion de capuchon (22), la portion de capuchon (22) et/ou la portion tubulaire (20) étant pourvues de plusieurs fentes de filtre (18) s'étendant dans la direction longitudinale de la portion tubulaire (20), qui présentent chacune une première extrémité (26) placée du côté de la portion tubulaire (20) et une deuxième extrémité (28) placée du côté de la portion de capuchon (22), **caractérisé en ce qu'**une douille (30, 42) disposée coaxialement par rapport à la portion tubulaire (20) est prévue, laquelle recouvre les fentes de filtre (18) dans la région de la première extrémité (26) des fentes de filtre (18).

2. Filtre selon la revendication 1, **caractérisé en ce que** la douille (30) est disposée à l'intérieur de la portion tubulaire (20) et/ou à l'intérieur de la portion de capuchon (22) et forme au moins en partie un canal d'écoulement à travers le filtre (16).

3. Filtre selon au moins l'une quelconque des revendications précédentes, **caractérisé en ce qu'**un alésage central de la douille (30) est élargi vers l'extrémité située en amont.

4. Filtre selon la revendication 3, **caractérisé en ce qu'**une surface frontale de la douille (30) est réalisée sous forme arrondie au niveau de l'extrémité située en amont.

5. Filtre selon l'une quelconque des revendications précédentes, **caractérisé en ce que** la douille (30; 42) s'applique, au moins dans la région de la première extrémité (26) des fentes de filtre (18), contre un côté extérieur ou un côté intérieur de la portion tubulaire (20) ou de la portion de capuchon (22).

6. Buse à haute pression (10) comprenant un filtre (16) selon au moins l'une quelconque des revendications précédentes.

7. Buse à haute pression (10) selon la revendication 6, **caractérisée en ce que** la douille (30) est disposée à l'intérieur de la portion tubulaire (20) et forme au moins en partie un canal d'écoulement à travers le filtre (16) et **en ce qu'**à l'extrémité de la douille (30) située en aval, une section transversale d'écoulement libre de la douille (30) correspond à la section transversale d'écoulement libre dans le boîtier de buse (12).

8. Procédé de fabrication d'un filtre (16) pour une buse à haute pression (10), comprenant les étapes consistant à scier des fentes de filtre (18) dans une portion tubulaire (20) et/ou dans une portion de capuchon (22) du filtre (16) parallèlement à une direction longitudinale de la portion tubulaire (20), et à disposer une douille (30; 42) coaxialement par rapport à la portion tubulaire (20), de telle sorte que la douille (30; 42) recouvre les fentes de filtre (18) dans la région de la première extrémité (26) des fentes de filtre (18).

9. Procédé selon la revendication 8, **caractérisé par** l'agencement de la douille (30) à l'intérieur de la portion tubulaire (20) et/ou de la portion de capuchon (22).

10. Procédé selon la revendication 8, **caractérisé par** l'agencement de la douille (42) sur un côté extérieur de la portion tubulaire (20) et/ou de la portion de capuchon (22).
